# EUROPÄISCHE PATENTSCHRIFT

(11) **EP 2 321 590 B1**
(45) Veröffentlichungstag und Bekanntmachung des Hinweises auf die Patenterteilung: **28.03.2018**
(21) Anmeldenummer: 09777879.9
(22) Anmeldetag: 13.08.2009
(51) Int. Cl.: F25B 15/12, F25B 15/14, C09K 5/04

(54) **KOMPAKTE RESORPTIONSMASCHINE**
COMPACT RESORPTION MACHINE
MACHINE À RESORPTION COMPACTE

(30) Priorität: 14.08.2008 DE 202008011174 U
(43) Veröffentlichungstag der Anmeldung: 18.05.2011
(73) Patentinhaber: Resotec GmbH, 74343 Sachsenheim (DE)
(72) Erfinder: WEIMER, Thomas, 71065 Sindelfingen (DE)
(74) Vertreter: Raible Deissler Lehmann Patentanwälte PartG mbB
(86) Internationale Anmeldenummer: PCT/EP2009/005900
(87) Internationale Veröffentlichungsnummer: WO 2010/017991

(56) Entgegenhaltungen:
- WO-A2-2004/104496
- CH-A5- 652 198
- DE-A1- 3 009 820
- DE-A1- 19 500 335
- DE-A1- 19 511 709
- US-A- 1 887 909
- FRANK SCHAAL ET AL: "EINSATZ GEKÜHLTER MEMBRANABSORBER IN DER ABSORPTIONSKÄLTETECHNIK" INTERNET CITATION 1. Januar 2005 (2005-01-01), Seite 12PP, XP007910548 Gefunden im Internet: URL:http://www.itt.uni-stuttgart.de/pdfs/2 005_schaal_dkv.pdf> [gefunden am 2009-11-13]

## Beschreibung

### Technisches Gebiet

Es wird eine Resorptionsanlage bereitgestellt, die eine Resorptionsverschaltung aufweist, mittels derer ein in der Resorptionsanlage herrschender Systemdruck gegenüber einer klassischen Absorptionsanlage deutlich reduziert werden kann. Das Problem aller bekannten Resorptionsverschaltungen ist ein nochmals erhöhter apparativer Aufwand gegenüber klassischen Absorptionskälteanlagen, welche an sich wesentlich teurer als Kompressionsanlagen sind. Insbesondere eine doppelte Ausführung von teuren Apparaten in Resorptionsanlagen, wie Absorber und Desorber konventioneller Ausführung führt dazu, dass diese bis heute nicht kommerziell erhältlich sind. Zur Reduktion von Anlagenkosten einer Resorptionsanlage werden kompakte und kostengünstige Wärmeübertragungsapparate als Absorber und Desorber eingesetzt. Hierzu besonders geeignete Apparate sind Plattenwärmeübertrager, Spiralwärmeübertrager und Membrankontaktoren mit intern oder extern angeordnetem Wärmeübertrager. Zudem sind Resorptionsanlagen auch für einen Einsatz mit neuartigen, umweltfreundlichen Kältemitteln geeignet, wie zum Beispiel Wasser oder CO₂.

### Technischer Hintergrund

Zum Kühlen werden im Wesentlichen zwei Technologien eingesetzt:
a) In einer Kompressionskälteanlage wird mechanische Energie zum Antrieb eines Kompressors benötigt.
b) In einer Absorptionsanlage wird Wärme zum Antrieb eines "thermischen Verdichters" benötigt.

Diese Technologien sind auch zum Heizen nach dem Wärmepumpenprinzip geeignet.

Kompressionskälteanlagen dominieren heute den Markt für Klimakälte und Wärmepumpen. Durch die Absorptionstechnik könnte der Bedarf an hochwertiger mechanischer Energie, die in Kompressionskälteanlagen eingesetzt wird, deutlich reduziert werden, da der Antrieb der Absorptionsanlagen im Wesentlichen mit Wärme erfolgt. Bislang konnte sich die Absorptionskältetechnik dennoch nicht durchsetzen, da die entsprechenden Anlagen, insbesondere die einzusetzenden Absorber und Desorber als Hauptapparate, deutlich teurer sind. Neben den im Vergleich zu Kompressionskälteanlagen zu hohen Investitionskosten ist auch das große Bauvolumen ein wesentliches Hemmnis für eine gleichwertige Verbreitung der konventionellen Absorptionskältetechnologie.

Es gibt folglich bisher keine kompakte und kostengünstige Absorptionsanlage zur Kälteerzeugung aus Abwärme oder Solarwärme in einem Leistungsbereich mit weniger als 100 kW Kälteleistung (< 100 kW). Für Großanlagen werden Absorptionsanlagen in Form von Absorptionskälteanlagen dagegen häufig, insbesondere im industriellen Umfeld eingesetzt (z.B. Firma "mattes engineering", Berlin). Erhältliche kompakte Absorptionsanlagen im Leistungsbereich < 100 kW sind lediglich für Erdgasfeuerungen ausgelegt (z.B. Firma Robur, Italien). Auch bei günstigen energetischen Randbedingungen für Absorptionsanlagen, wie der Möglichkeit von Abwärmenutzung oder der Einkopplung von Solar- oder Umweltwärme, werden trotzdem zumeist Kompressionskälteanlagen bzw. Kompressionsmaschinen eingesetzt, die zum Antrieb wertvolle mechanische Energie benötigen.

Aus der Patentschrift DE 38 08 257 C1 ist bspw. eine Kompressions-Wärmepumpe bzw. -Kältemaschine bekannt, die als Resorber und/oder Entgaser jeweils einen schräg geneigt angeordneten plattenförmigen Wärmetauscher umfasst. Bei der beschriebenen Anlage handelt es sich jedoch um eine Kompressionsanlage, der, wie voranstehend beschrieben, im Vergleich zu einer Absorptionsanlage eine grundlegend abweichende Technik der Kälteerzeugung zugrunde liegt. Die Anlage weist somit keine Resorptionsverschaltung auf und benötigt statt dessen einen Kompressor, der einen zusätzlichen hohen Energiebedarf verursacht. Zwar können der Resorber und/oder der Entgaser einen plattenförmigen Wärmetauscher umfassen, doch ist dieser aufgrund seiner speziellen und großvolumigen Anordnung und Ausgestaltung für eine kompakte und kostengünstige Bauweise der Anlage nicht zielführend.

Im Gegensatz hierzu sind als Plattenwärmetauscher im Sinne dieser Beschreibung vielmehr im wesentlichen ebene Wärmetauscher zu verstehen, die aus mehreren plattenförmigen Ebenen bzw. Schichten bestehen. Im Inneren der Plattenwärmetauscher werden bspw. zwei oder mehrere Fluide auf engem, begrenztem Raum derart relativ zueinander geführt, dass eine kompakte Bauweise bei gleichzeitigem gegenseitigem Wärmeaustausch ermöglicht wird. Aufgrund dieser Kompaktheit kann somit eine hohe volumenspezifische Leistungsdichte des Wärmetauschers erzielt werden. Wie nachfolgend noch dargelegt wird, können als Plattenwärmetauscher handelsübliche Plattenwärmetauscher eingesetzt werden, so dass auf günstige Standardbauteile zurückgegriffen und auf diese Weise die Herstellungskosten der Anlage gering gehalten werden kann.

In der europäischen Patentschrift EP 0 061 888 A2 wird ein kombiniertes Adsorptions- und Resorptionsverfahren unter Verwendung einer Resorptionswärmepumpe mit einem Generator, Resorber, Evaporator und einem Absorber beschrieben. Darüber hinaus erfordert die dem Verfahren zugrunde liegende Anlage u.a. den Einsatz eines Adsorbers, der einen Wärmetauscher mit einer Heizspirale aufweist. Derartige Heizspiralen zeichnen sich im wesentlichen dadurch aus, dass ein erstes Fluid durch die Heißspirale strömt oder die Heizspirale anderweitig erhitzt wird und ein zweites Fluid relativ zu der Spirale in einem großen, die Heizspirale umgebenden Behältnis ruht. Patentschrift US 1887909 beschreibt eine Anlage zum Heizen oder Kühlen mit einer Resorptionsverschaltung, gemäß dem Oberbegriff des Anspruchs 1. Im Gegensatz dazu wird unter einem Spiralwärmetauscher gemäß dieser Beschreibung ein Wärmetauscher verstanden, der analog zu der vorhergehenden Beschreibung des Plattenwärmetauschers eine Führung von mehreren Fluiden auf engem Raum zum gegenseitigen Wärmeaustausch vorsieht. Der Spiralwärmetauscher zeichnet sich ebenfalls durch hohe volumenspezifische Leistungsdichte und einen hohen Grad an Kompaktheit aus. Vereinfacht dargestellt, kann der Spiralwärmetauscher dem wesentlichen Aufbau des Plattenwärmetauschers mit dem Unterschied entsprechen, dass die Ebenen des Plattenwärmetauschers als gekrümmte Schichten ausgestaltet sind. Der Spiralwärmetauscher kann somit, zumindest bildlich gesprochen, einer um eine Längsachse gewickelten Variante des Plattenwärmetauschers entsprechen.
Aktuell werden in Deutschland einige Projekte zur Entwicklung von Absorptionsanlagen kleiner Leistung zur solaren Kühlung durchgeführt. Hier sind insbesondere die TU Berlin, das ILK Dresden, die FH Stuttgart sowie die Universität Stuttgart zu nennen. Erste entwickelte Anlagen für kleine Leistung sind auch schon kommerziell erhältlich (Firma EAW Anlagenbau (www.eaw-energieanlagenbau.de) und Firma Phönix Sonnenwärme). Diese wiegen jedoch einige 100 kg und kosten deutlich über 500 Euro/kW Kälteleistung. In den Anlagen werden teure und großvolumige Rohrbündelapparate als Absorber und Desorber eingesetzt. In diesen Systemen wird zudem Wasser als Kältemittel verwendet, wodurch der Einsatz dieser Anlagen als Wärmepumpe auf Temperaturen über 0 °C limitiert ist.

In dem von der DBU (Deutsche Bundesstiftung Umwelt) geförderten Projekt Nr. 20967 "Membranapparate zur umweltfreundlichen solaren Klimatisierung" wurde der Einsatz von Membranmodulen untersucht. Mit Membranen lassen sich sehr kompakte Bauformen von Absorbern und Desorbern realisieren, da hier sehr große Phasengrenzflächen bereitgestellt werden und auf Grund der Zwangsführung der Phasen ein sehr guter Wärme- und Stofftransport realisiert werden kann. Auf Grund der Projektergebnisse konnte gezeigt werden, dass eine Miniaturisierung von konventionellen Absorptionskälteanlagen mittels Membranen möglich ist und eine wirtschaftliche Anwendung, insbesondere in Gebäuden, erwartet werden kann (Mattes, H.; Hasse, H.; Schaal, F.; Weimer, T.: Membranapparate für umweltfreundliche Absorptionskälteanlagen und -wärmepumpen. Abschlussbericht über das DBU-Forschungsvorhaben 20967, 2006.).

Allerdings ist der Einsatz von Absorptionsanlagen als Wärmepumpe auch beim zukünftigen Einsatz von Membranapparaten als Absorber und Desorber dadurch limitiert, dass die konventionellen Kältemittel für Absorptionsanlagen in diesem Einsatz gravierende Nachteile haben. Vor allem die klassische Verwendung von Ammoniak als Kältemittel führt zu hohen Systemdrücken, wodurch der Einsatz von polymerbasierten Membranapparaten erschwert wird. Ein weiterer Nachteil ist die notwendige Reinigung des im Desorber ausgetriebenen Dampfes, die insbesondere bei Kleinanlagen nicht kostengünstig realisiert werden kann.

### Resorption

Diese beiden Probleme können mit einer sogenannten Resorptionsverschaltung gelöst werden. Mit einer Resorptionsverschaltung, die als Verschaltungsvariante konventioneller Absorptionsanlagen verstanden werden kann, wird der Systemdruck gegenüber den konventionellen Absorptionsanlagen deutlich reduziert. Die technischen Vorteile der Resorptionsverschaltung gegenüber der konventionellen Absorptionstechnologie sind aus der Beispielrechnung für das System Ammoniak(NH₃)/Wasser in der folgenden Tabelle ersichtlich.

**Tabelle: Thermodynamischer Vergleich zwischen Resorption und konventioneller Absorption**

| | konv. Absorption NH₃/H₂O | Resorption NH₃/H₂O |
|---|---|---|
| T_{min,Nutz} (°C) | 3 (6-12) | 2 - 9 (5 -12) |
| T_{KW,Abs} (°C) | 32 (35 - 42) | 32 (35 -42/48) |
| Tₘₐₓ (°C) | **95- 86** (91-82) | **90-76** (86 -72) |
| Pₘᵢₙ (bar) | 5,1 | 1 |
| Pₘₐₓ (bar) | **16,4** | **3,5** |
| COP (coefficient of performance) | 0,62 | 0,6 |

Man erkennt den deutlich reduzierten maximalen Druck Pₘₐₓ für eine Resorptionsverschaltung. Ebenso ist eine Reduzierung der benötigten Antriebstemperatur Tₘₐₓ erkennbar, was insbesondere bei der Verwendung von Abwärme oder Solarenergie ein zusätzlicher Vorteil ist. Als weiterer Vorteil der Resorptionsverschaltung gegenüber konventionellen Absorptionsanlagen befindet sich das NH₃ vorwiegend in gelöster Form in der Anlage, nur eine sehr kleine Menge liegt als (fast) reines Gas vor. Vor allem für Anwendungen im kleinen Leistungsbereich (< 100 kW Kälteleistung) ist zudem der Wegfall der Gasreinigung bei Verwendung flüchtiger Lösemittel ein weiterer gravierender Vorteil.

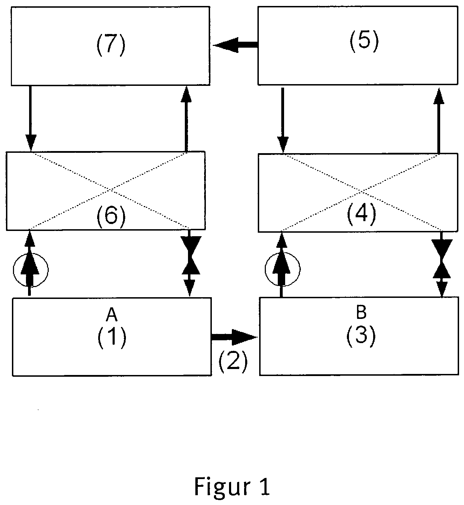

Figur 1 zeigt einen beispielhaften Resorptionskreislauf. In einem Resorptionskreislauf wird aus einem flüssigen Gemisch A Kältemittel in einem Desorber (1) bei tiefer Temperatur und geringem Druck verdampft. Der Kältemitteldampf (2) wird in einem Absorber (3) bei gleichem Druck und einer Temperatur im Bereich der Umgebungstemperatur aufgenommen. Damit dies funktioniert, muss ein flüssiges Gemisch B im Absorber (3) eine geringere Konzentration an Kältemittel besitzen. Zur Rückführung des Kältemittels zum Gemisch A wird das Gemisch B vom Absorber über einen Wärmeübertrager (4) einem heißen Desorber (5) zugeführt, in dem das Kältemittel bei hoher Temperatur und hohem Druck ausgetrieben wird. Die Temperatur muss so gewählt werden, dass das Gemisch A den Kältemitteldampf bei Umgebungstemperatur aufnehmen kann, nachdem es aus dem kalten Desorber (1) über einen weiteren Lösemittelwärmeübertrager (6) in einen zweiten Absorber (7) gepumpt wurde. Ein Resorptionskreislauf ist in Figur 1 dargestellt und beispielsweise auch in DE 3018739 A1 für Ammoniak-Wasser Mischungen beschrieben. Hier ist auch eine in Figur 1 nicht eingezeichnete Flüssigkeitsrückführung zwischen den beiden Flüssigkeitskreisläufen zum Ausgleich unterschiedlicher Dampfkonzentrationen aufgeführt. Ein weiterer Resorptionskreislauf ist beispielsweise in DE 10 2004 056 484 A1 beschrieben. Hier ist als Kernkomponente ein als komplexer Rohrbündelapparat ausgebildeter Resorber geschützt.

DE 195 11 709 A1 beschreibt ein Verfahren zur Erzeugung von Kälte und Wärme mit Hilfe einer durch Pervaporation angetriebenen Sorptionskältemaschine. Diese Sorptionskältemaschine umfasst einen Entgaser, einen Absorber und eine dazwischen geschaltete Gegenstrom-Pervaporations-Einheit.

DE 195 00 335 A1 beschreibt ein Verfahren zur Erzeugung von Kälte und Wärme mit Hilfe einer umkehr-osmotisch angetriebenen Sorptionskältemaschine. Diese Anlage umfasst einen Entgaser, einen Absorber und eine dazwischen geschaltete als Konzentrationswechsler arbeitende Gegenstrom-Umkehrosmose-Einheit.

Das Dokument "Einsatz gekühlter Membranabsorber in der Absorptionskältetechnik" von Frank Schaal et al. beschreibt den Einsatz von Membranabsorbern mit mikroporösen, polymerischen Hohlfasermembranen in Absorptionskältemaschinen. Diese Absorber können als roher Bündelabsorber oder als Plattenabsorber vorliegen.

Das Problem aller bekannten Resorptionskreisläufe bzw. - verschaltungen ist somit ein nochmals erhöhter apparativer Aufwand gegenüber klassischen Absorptionsanlagen bzw. Absorptionskälteanlagen, welche an sich wesentlich teurer als Kompressionsanlagen sind. Insbesondere die doppelte Ausführung der teuren Apparate Absorber (3, 7) und Desorber (1, 5) in Resorptionsanlagen führt dazu, dass diese bis heute nicht kommerziell erhältlich sind.

### Zusammenfassung der Erfindung

Eine Aufgabe der Erfindung ist die Bereitstellung einer auf dem Resorptionsprinzip basierenden Anlage zum Heizen und Kühlen mit einer Resorptionsverschaltung mit zwei Absorbern und zwei Desorbern, die zu einer deutlichen Reduzierung der Investitionskosten, des Bauvolumens und des Gewichts für wärmegetriebene Absorptionsanlagen führt. Zudem soll die Anlage auch für einen Einsatz mit neuartigen, umweltfreundlichen Kältemitteln geeignet sein. Zur Lösung dieser Aufgabe wird eine Anlage zum Heizen oder Kühlen mit einer Resorptionsverschaltung, mit zwei Absorbern und zwei Desorbern bereitgestellt. Dabei ist mindestens ein Absorber oder mindestens ein Desorber als mindestens ein kompakter Wärmeübertragungsapparat oder als mindestens ein Membrankontaktor ausgeführt, wobei der Wärmeübertragungsapparat aus einer Gruppe bestehend aus Plattenwärmeüberträgern und Spiralwärmeüberträgern ausgewählt ist.

Es werden somit kompakte und kostengünstige Wärmeübertragungsapparate als Absorber und Desorber in einer Resorptionsanlage bzw. einer Anlage mit Resorptionsverschaltung eingesetzt.

Entsprechend einer Ausführungsform umfasst der mindestens eine Membrankontaktor mindestens einen zusätzlichen Wärmeübertragungsapparat, wobei der Wärmeübertragungsapparat entweder in den mindestens einen Membrankontaktor integriert oder extern dem Membrankontaktor zugeordnet ist.

Besonders geeignete Apparate zur Lösung der Aufgabe sind demnach Plattenwärmeübertrager, Spiralwärmeübertrager und Membrankontaktoren mit intern oder extern angeordnetem Wärmeübertragungsapparat.

Zur weiteren Kostenreduktion können der mindestens eine Absorber oder Desorber Polymermaterialien enthalten, wobei insbesondere die Spiralwärmeübertrager und Membrankontaktoren aus Polymermaterialien gefertigt sein können, wie sie beispielsweise in DE 10 2006 036 965 A1 beschrieben sind.

Plattenwärmeübertrager werden von einer Vielzahl von Firmen zu günstigen Kosten angeboten. Diese können prinzipiell auch als Absorber bzw. Desorber eingesetzt werden. Dabei sind dann geeignete Vorrichtungen zur Mischung bzw. Trennung von Gas und Flüssigkeit vor bzw. hinter dem jeweiligen Apparat notwendig, z. B. Düsen oder Ejektoren für die Mischung und nachgeschaltete Abscheider für die Trennung.

Selbstverständlich ist auch der Einsatz anderer kostengünstiger und kompakter Wärmeübertrager zum Ersatz der konventionellen Rohrbündelapparate möglich. Auch können verschiedenartige Apparate in einer Anlage eingesetzt werden, wie beispielsweise ein Plattenapparat für den heißen Desorber und Lösemittelwärmeübertrager, ein Polymer-Spiralwärmeübertrager für den kalten Lösemittelwärmeübertrager und Membrankontaktoren für den kalten Desorber und die Absorber.

Entsprechend einer Ausführungsform umfasst ein einzusetzendes Kältemittel Ammoniak (NH₃). Außerdem kann ein einzusetzendes Lösemittel Wasser oder eine wässrige Lösung umfassen. Mit dem Einsatz von NH₃ als Kältemittel und Wasser als Lösemittel in der Anlage wird ein weites Anwendungsspektrum hinsichtlich der Temperaturen abgedeckt. Zur Reduzierung der Systemdrücke und des Wassergehalts im Gas kann dem Wasser zusätzlich beispielsweise ein Salz zugegeben werden, so dass das einzusetzende Lösemittel beispielsweise eine wässrige Salzlösung umfasst. Als alternatives Lösemittel zu Wasser kann auch ein ionisches Fluid eingesetzt werden, so dass das einzusetzende Lösemittel beispielsweise ein ionisches Fluid umfasst.

Eine weitere Verbesserung wird durch den Einsatz neuartiger Kältemittel/Lösemittel- Paarungen erreicht, wodurch die Sicherheitstechnik der Anlage gegenüber NH₃/Wasser Anlagen reduziert werden kann. Prinzipiell sind alle binären Gemische einsetzbar, die bei den jeweiligen Temperaturen in den entsprechenden Apparaten flüssige Gemische bilden können und deren Komponenten bei diesen jeweiligen Temperaturen unterschiedliche Gleichgewichtsdrücke besitzen. Besonders vorteilhaft ist der Einsatz von ungiftigen Stoffpaarungen, welche bei den jeweiligen Temperaturen in der Anlage moderate Drücke bilden, wobei vorzugsweise der Maximaldruck kleiner als 10 bar sein sollte.

Geeignete neue Stoffpaarungen für Resorptionsanlagen sind CO₂ als einzusetzendes Kältemittel in Kombination mit Karbonat-/Hydrogenkarbonatlösungen bzw. wässrigen Karbonat-/Bicarbonatlösungen oder mit Aminlösungen oder mit ionischen Fluiden als Lösemittel. Besonders geeignete Karbonatlösungen sind Kaliumkarbonatlösungen, besonders geeignete Aminlösungen sind Monoethanolamin- und Diethanolaminlösungen. Dann erhält man eine kostengünstige Niederdruckanlage mit einem umweltfreundlichen, ungiftigen und nicht brennbaren Kältemittel.

Entsprechend einer weiteren Ausführungsform kann das Lösemittel als Aminlösung eine wässrige Monoethanolaminlösung oder eine wässrige Diethanolaminlösung umfassen.

Eine weitere Alternative ist der Einsatz von Wasser als Kältemittel in Kombination mit Salzlösungen, beispielsweise Lithiumbromidlösung, oder mit ionischen Fluiden.

Die Resorptionsanlage eignet sich aufgrund der reduzierten benötigten Temperaturen zur Beheizung des heißen Desorbers gegenüber konventionellen Absorptionsanlagen sehr gut zur Kopplung mit allen Arten von brennerbasierten Heizungen und/oder solaren Wärmeerzeugern. Zudem ist auch eine Nutzung von Abwärme mit Resorptionsanlagen sowohl zum Kühlen als auch mit Blockheizkraftwerken, Motoren und Brennstoffzellen möglich.

Des weiteren wird ein Verfahren zum Heizen oder Kühlen mittels einer Anlage zum Heizen oder Kühlen mit einer Resorptionsverschaltung bereitgestellt mit zwei Absorbern und zwei Desorbern, wobei mindestens ein Absorber oder mindestens ein Desorber als mindestens ein kompakter Wärmeübertragungsapparat oder als mindestens ein Membrankontaktor ausgeführt ist und der Wärmeübertragungsapparat aus einer Gruppe bestehend aus Plattenwärmeüberträgern und Spiralwärmeüberträgern ausgewählt ist.
Hierbei kann die dem Verfahren zugrundeliegende Anlage gemäß der Beschreibung ausgebildet sein.
Weitere Vorteile und Ausgestaltungen der Erfindung ergeben sich aus der Beschreibung und den beiliegenden Zeichnungen. Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

Figur 1 zeigt einen beispielhaften Resorptionskreislauf.
Figur 2 zeigt eine Ausführungsform einer erfindungsgemäßen Resorptionsanlage.

### Detaillierte Beschreibung

### Anwendungsbeispiel

Figur 1 zeigt einen beispielhaften Resorptionskreislauf. Wie bereits voranstehend im Abschnitt "Resorption" beschrieben, wird in dem Resorptionskreislauf aus einem flüssigen Gemisch A Kältemittel in einem Desorber (1) bei tiefer Temperatur und geringem Druck verdampft. Der Kältemitteldampf (2) wird in einem Absorber (3) bei gleichem Druck und einer Temperatur im Bereich der Umgebungstemperatur aufgenommen. Damit dies funktioniert, muss ein flüssiges Gemisch B im Absorber (3), bei gleichem Lösemittel wie in Gemisch A, eine geringere Konzentration an Kältemittel besitzen. Zur Rückführung des Kältemittels zum Gemisch A wird das Gemisch B vom Absorber über einen Wärmeübertrager (4) einem heißen Desorber (5) zugeführt, in dem das Kältemittel bei hoher Temperatur und hohem Druck ausgetrieben wird. Die Temperatur muss so gewählt werden, dass das Gemisch A den Kältemitteldampf bei Umgebungstemperatur aufnehmen kann, nachdem es aus dem kalten Desorber (1) über einen weiteren Lösemittelwärmeübertrager (6) in einen zweiten Absorber (7) gepumpt wurde. Ein Resorptionskreislauf ist in Figur 1 dargestellt und beispielsweise auch in DE 3018739 A1 für Ammoniak-Wasser Mischungen beschrieben. Hier ist auch eine in Figur 1 nicht eingezeichnete Flüssigkeitsrückführung zwischen den beiden Flüssigkeitskreisläufen zum Ausgleich unterschiedlicher Dampfkonzentrationen aufgeführt.

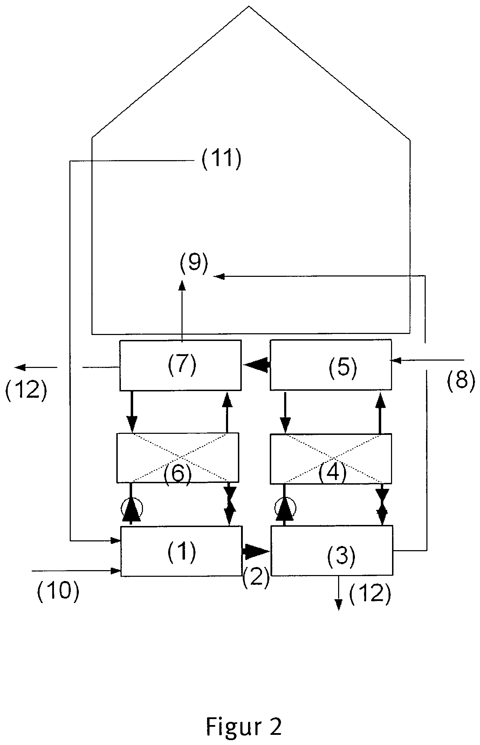

In Figur 2 ist der Einsatz einer Resorptionsanlage zum Heizen und Kühlen in einem Haus dargestellt. Es wird ein modernes Gebäude mit einem maximalen Wärmebedarf von 12 kW (ca. 170 m² Wohnfläche a 70 Watt/m²) bei 2000 jährlichen Volllaststunden Heizbedarf diskutiert. Mit einer konventionellen und effizienten Heizung (Wirkungsgrad 100 %) resultiert ein Brennstoffbedarf von ca. 24000 kWh/a.

Im Winter wird die Resorptionsanlage auf der heißen Seite durch die Brennerheizung (8) mit 90°C Vorlauftemperatur und 76°C Rücklauftemperatur beheizt. Bei einer konventionellen Absorptionskälteanlage ohne Resorptionsverschaltung müsste die Vorlauftemperatur dagegen 95°C und der Rücklauf 86°C betragen, siehe Tabelle oben. Im kalten Desorber (1) wird Umweltwärme oder Solarwärme (10) bei einer Temperatur von 12°C aufgenommen. Die Abwärme der Absorber (9) wird zur Gebäudeheizung mit Heizungsvorlauftemperaturen von 40°C verwendet. Der Wirkungsgrad der Resorptionsanlage zur Beheizung liegt dann über 150% des Brennstoffheizwerts, bei maximaler Leistung beträgt dann der Leistungsbedarf an Brennstoff ca. 8 kW. Somit resultiert bei 2000 Volllaststunden ein Brennstoffbedarf von 16000 kWh/Jahr, die Brennstoffeinsparung beträgt 8000 kWh jährlich oder 33 % im Vergleich zur konventionellen Beheizung. Ein Solarkollektor benötigt hierzu im Winter eine maximale thermische Leistung von 4 kW. Die benötigte Kollektorfläche kann mit 15 m² abgeschätzt werden (400 W/m² Solarstrahlung im Winter mit 70% Wirkungsgrad).

Zusätzlich kann im Sommer ein Klimakältebedarf (11) von ca. 4500 kWh (4,5 kW mit 1000 Volllaststunden/Jahr) umweltneutral gedeckt werden. Die Klimakälte (11) wird im kalten Desorber (1) mit Vorlauftemperaturen von 5°C erzeugt. Der Solarkollektor benötigt hierzu im Hochsommer eine maximale Wärmeleistung von ca. 8 kW bei Temperaturen von 90°C, um den heißen Desorber anzutreiben. Bei 70% Wirkungsgrad und 15 m² Fläche ist eine Solarstrahlung von 760 W/m² Kollektorfläche für diese maximale Kühlleistung notwendig. Die Abwärme der Absorber (12) wird an die Umgebung abgegeben, zum Beispiel über einen Kühlturm. Die Einsparung an elektrischer Energie im Sommer wird mit 1500 kWh abgeschätzt, das entspricht der Substitution einer konventionellen Kompressionsklimaanlage mit einer Leistungsziffer von ca. 3.

Um den wirtschaftlich sinnvollen Einsatz einer Resorptionsanlage abzuschätzen, wird angenommen, dass Investitionen für Solarkollektor und Kühlturm eine Kompressionsklimaanlage ersetzen. Somit muss sich die Resorptionsanlage über die Heizkosteneinsparung amortisieren. Bei einem Preis von 0,06 €/kWh Brennstoff ergibt sich eine jährliche Kostenersparnis von ca. 500 €. Mit einer Annuität der Investition von 0,14 ergibt sich die zulässige Investition für die Resorptionsanlage zu 3500 € oder ca. 800 €/kW Kälteleistung. Diese spezifischen Preise werden von auf dem Markt erhältlichen Kleinanlagen zur solaren Kühlung auf Absorptionsbasis nicht erreicht. Zudem können diese nur bedingt im Wärmepumpenbetrieb eingesetzt werden. Aus dieser Beschreibung ist daher die Notwendigkeit der Entwicklung von kostengünstigen Kleinanlagen auf Resorptionsbasis zum Heizen und Kühlen klar ersichtlich.

## Patentansprüche

1. Anlage zum Heizen oder Kühlen mit einer Resorptionsverschaltung **dadurch gekennzeichnet,**
**dass** die Anlage zwei Absorber (3, 7) und zwei Desorber (1, 5) umfasst, und
**dass** mindestens ein Absorber (3, 7) oder mindestens ein Desorber (1, 5) als mindestens ein kompakter Wärmeübertragungsapparat oder als mindestens ein Membrankontaktor ausgeführt ist, wobei der Wärmeübertragungsapparat aus einer Gruppe bestehend aus Plattenwärmeüberträgern und Spiralwärmeüberträgern ausgewählt ist.

2. Anlage nach Anspruch 1, **dadurch gekennzeichnet, dass** der mindestens eine Membrankontaktor mindestens einen zusätzlichen Wärmeübertragungsapparat umfasst, wobei der Wärmeübertragungsapparat entweder in den mindestens einen Membrankontaktor integriert oder extern dem Membrankontaktor zugeordnet ist.

3. Anlage zum Heizen und Kühlen nach einem der Ansprüche 1 bis 2, **dadurch gekennzeichnet, dass** mindestens ein Absorber oder Desorber Polymermaterialien enthält.

4. Anlage zum Heizen und Kühlen nach mindestens einem der Ansprüche 1 bis 3, **dadurch gekennzeichnet, dass** ein einzusetzendes Kältemittel Ammoniak umfasst.

5. Anlage zum Heizen und Kühlen nach mindestens einem der Ansprüche 1 bis 3, **dadurch gekennzeichnet, dass** ein einzusetzendes Kältemittel Wasser umfasst.

6. Anlage zum Heizen und Kühlen nach einem der Ansprüche 1 bis 3, **dadurch gekennzeichnet, dass** ein einzusetzendes Kältemittel CO₂ umfasst.

7. Anlage zum Heizen und Kühlen nach einem der Ansprüche 4 bis 6, **dadurch gekennzeichnet, dass** ein einzusetzendes Lösemittel ein ionisches Fluid umfasst.

8. Anlage zum Heizen und Kühlen nach Anspruch 4, **dadurch gekennzeichnet, dass** ein einzusetzendes Lösemittel Wasser oder eine wässrige Salzösung umfasst.

9. Anlage zum Heizen und Kühlen nach Anspruch 8, **dadurch gekennzeichnet, dass** das einzusetzende Lösemittel eine wässrige Lithiumbromidlösung umfasst.

10. Anlage zum Heizen und Kühlen nach Anspruch 6, **dadurch gekennzeichnet, dass** ein einzusetzendes Lösemittel eine wässrige Kaliumcarbonat-/bicarbonatlösung umfasst.

11. Anlage zum Heizen und Kühlen nach Anspruch 6, **dadurch gekennzeichnet, dass** ein einzusetzendes Lösemittel eine wässrige Aminlösung umfasst.

12. Anlage zum Heizen und Kühlen nach Anspruch 11, **dadurch gekennzeichnet, dass** das einzusetzende Lösemittel eine wässrige Monoethanolaminlösung umfasst.

13. Anlage zum Heizen und Kühlen nach Anspruch 11, **dadurch gekennzeichnet, dass** das einzusetzende Lösemittel eine wässrige Diethanolaminlösung umfasst.

14. Verfahren zum Heizen oder Kühlen mittels einer Anlage zum Heizen oder Kühlen mit einer Resorptionsverschaltung, **dadurch gekennzeichnet,**
**dass** die Anlage zwei Absorber und zwei Desorber umfasst, und
**dass** mindestens ein Absorber oder mindestens ein Desorber als mindestens ein kompakter Wärmeübertragungsapparat oder als mindestens ein Membrankontaktor ausgeführt wird, wobei der Wärmeübertragungsapparat aus einer Gruppe bestehend aus Plattenwärmeüberträgern und Spiralwärmeüberträgern ausgewählt wird.

15. Verfahren nach Anspruch 14, wobei die Anlage nach einem der Ansprüche 1 bis 13 ausgebildet ist.

## Claims

1. System for heating or cooling having a resorption circuit, **characterized in that**
the system comprises two absorbers (3, 7) and two desorbers (1, 5), and
**in that** at least one absorber (3, 7) or at least one desorber (1, 5) is embodied as at least one compact heat exchanger device or as at least one membrane contactor, with the heat exchanger device being selected from a group consisting of plate heat exchangers and spiral heat exchangers.

2. System pursuant to Claim 1, **characterized in that** the at least one membrane contactor comprises at least one additional heat exchanger device, with the heat exchanger device being either integrated into the at least one membrane contactor or externally associated with the membrane contactor.

3. System for heating and cooling pursuant to either of Claims 1 or 2, **characterized in that** at least one absorber or desorber includes polymer materials.

4. System for heating and cooling pursuant to at least one of Claims 1 through 3, **characterized in that** a refrigerant to be used comprises ammonia.

5. System for heating and cooling pursuant to at least one of Claims 1 through 3, **characterized in that** a refrigerant to be used comprises water.

6. System for heating and cooling pursuant to any of Claims 1 through 3, **characterized in that** a refrigerant to be used comprises CO2.

7. System for heating and cooling pursuant to any of Claims 4 through 6, **characterized in that** a solvent to be used comprises an ionic fluid.

8. System for heating and cooling pursuant to Claim 4, **characterized in that** a solvent to be used comprises water or an aqueous salt solution.

9. System for heating and cooling pursuant to Claim 8, **characterized in that** the solvent to be used comprises an aqueous lithium bromide solution.

10. System for heating and cooling pursuant to Claim 6, **characterized in that** a solvent to be used comprises an aqueous potassium carbonate/bicarbonate solution.

11. System for heating and cooling pursuant to Claim 6, **characterized in that** a solvent to be used comprises an aqueous amine solution.

12. System for heating and cooling pursuant to Claim 11, **characterized in that** the solvent to be used comprises an aqueous monoethanolamine solution.

13. System for heating and cooling pursuant to Claim 11, **characterized in that** the solvent to be used comprises an aqueous diethanolamine solution.

14. Method for heating or cooling by means of a system for heating or cooling having a resorption circuit, **characterized in that**
the system comprises two absorbers and two desorbers, and
**in that** at least one absorber or at least one desorber is embodied as at least one compact heat exchanger device or as at least one membrane contactor, with the heat exchanger device being selected from a group consisting of plate heat exchangers and spiral heat exchangers.

15. Method pursuant to Claim 14, with the system being designed pursuant to any of Claims 1 through 13.

## Revendications

1. Installation de chauffage ou de refroidissement avec un agencement à résorption, **caractérisée en ce que**
l'installation comprend deux absorbeurs (3, 7) et deux désorbeurs (1, 5),
et **en ce qu'**au moins un absorbeur (3, 7) ou au moins un désorbeur (1, 5) est réalisé sous la forme d'au moins un appareil compact de transfert de chaleur ou d'au moins un contacteur à membrane, sachant que l'appareil de transfert de chaleur est choisi dans un groupe composé d'échangeurs de chaleur à plaques et d'échangeurs de chaleur en spirale.

2. Installation selon la revendication 1, **caractérisée en ce que** l'au moins un contacteur à membrane comprend au moins un appareil supplémentaire de transfert de chaleur, sachant que l'appareil de transfert de chaleur est soit intégré dans l'au moins un contacteur à membrane, soit associé de manière externe au contacteur à membrane.

3. Installation de chauffage et de refroidissement selon l'une des revendications 1 à 2, **caractérisée en ce qu'**au moins un absorbeur ou désorbeur comprend des matériaux polymères.

4. Installation de chauffage et de refroidissement selon au moins une des revendications 1 à 3, **caractérisée en ce qu'**un réfrigérant à utiliser comprend de l'ammoniac.

5. Installation de chauffage et de refroidissement selon au moins une des revendications 1 à 3, **caractérisée en ce qu'**un réfrigérant à utiliser comprend de l'eau.

6. Installation de chauffage et de refroidissement selon l'une des revendications 1 à 3, **caractérisée en ce qu'**un réfrigérant à utiliser comprend du CO2.

7. Installation de chauffage et de refroidissement selon l'une des revendications 4 à 6, **caractérisée en ce qu'**un solvant à utiliser comprend un fluide ionique.

8. Installation de chauffage et de refroidissement selon la revendication 4, **caractérisée en ce qu'**un solvant à utiliser comprend de l'eau ou une solution saline aqueuse.

9. Installation de chauffage et de refroidissement selon la revendication 8, **caractérisée en ce que** le solvant à utiliser comprend une solution aqueuse de bromure de lithium.

10. Installation de chauffage et de refroidissement selon la revendication 6, **caractérisée en ce qu'**un solvant à utiliser comprend une solution aqueuse de bicarbonate/carbonate de potassium.

11. Installation de chauffage et de refroidissement selon la revendication 6, **caractérisée en ce qu'**un solvant à utiliser comprend une solution aqueuse d'amine.

12. Installation de chauffage et de refroidissement selon la revendication 11, **caractérisée en ce que** le solvant à utiliser comprend une solution aqueuse de monoéthanolamine.

13. Installation de chauffage et de refroidissement selon la revendication 11, **caractérisée en ce que** le solvant à utiliser comprend une solution aqueuse de diéthanolamine.

14. Procédé de chauffage ou de refroidissement au moyen d'une installation de chauffage ou de refroidissement avec un agencement à résorption, **caractérisé en ce que** l'installation comprend deux absorbeurs et deux désorbeurs,
et **en ce qu'**au moins un absorbeur ou au moins un désorbeur est réalisé sous la forme d'au moins un appareil compact de transfert de chaleur ou d'au moins un contacteur à membrane, sachant que l'appareil de transfert de chaleur est choisi parmi un groupe composé d'échangeurs de chaleur à plaques et d'échangeurs de chaleur en spirale.

15. Procédé selon la revendication 14, sachant que l'installation est configurée selon l'une des revendications 1 à 13.
